# EUROPÄISCHE PATENTSCHRIFT

(11) **EP 3 663 838 B1**
(45) Veröffentlichungstag und Bekanntmachung des Hinweises auf die Patenterteilung: **30.09.2026**
(21) Anmeldenummer: 18209854.1
(22) Anmeldetag: 03.12.2018
(51) Int. Cl.: G02C 7/02

(54) **BRILLENGLAS, FAMILIE VON BRILLENGLÄSERN, VERFAHREN ZUM ENTWURF EINER FAMILIE VON BRILLENGLÄSERN UND VERFAHREN ZUM HERSTELLEN EINES BRILLENGLASES**
SPECTACLE LENS, FAMILY OF SPECTACLE LENSES, METHOD FOR DESIGNING A SPECTACLE LENS FAMILY AND METHOD FOR PRODUCING A SPECTACLE LENS
VERRE DE LUNETTES, FAMILLE DE VERRES DE LUNETTES, PROCÉDÉ DE CONCEPTION D'UNE FAMILLE DE VERRES DE LUNETTES ET PROCÉDÉ DE FABRICATION D'UN VERRE DE LUNETTES

(43) Veröffentlichungstag der Anmeldung: 10.06.2020
(73) Patentinhaber: Carl Zeiss Vision International GmbH, 73430 Aalen (DE)
(72) Erfinder: WELSCHER, Markus, 73492 Rainau (DE)
(74) Vertreter: PATERIS PartmbB

(56) Entgegenhaltungen:
- EP-A1- 2 821 840
- US-A- 3 960 442
- US-A1- 2006 132 708
- US-A1- 2010 149 492

## Beschreibung

Die vorliegende Erfindung betrifft ein computerimplementiertes Verfahren zum Entwerfen einer Familie von Einstärken-Brillengläsern und ein nichtflüchtiges computerlesbares Speichermedium mit darauf gespeicherten Instruktionen zum Ausführen des Verfahrens auf einem Computer. Schließlich betrifft die Erfindung auch ein Verfahren zum Herstellen eines Brillenglases.

Brillengläser, insbesondere auch Einstärken-Brillengläser, also solche Brillengläser, bei denen von der Konstruktion her nur eine dioptrische Wirkung vorhanden ist, werden mit Asphären versehen, um Bildfehler zu reduzieren oder um flachere Brillengläser herstellen zu können, ohne dabei die Bildfehler des Brillenglases zu vergrößern. Brillengläser können für dieselbe rezeptgemäße Wirkung unterschiedliche Bildfehlerverteilungen über die Brillenglasfläche aufweisen, wobei eine Bildfehlerverteilung die Abweichung der rezeptgemäßen Wirkung des Brillenglases von der mit ihm tatsächlich erzielten Wirkung an unterschiedlichen über das Brillenglases verteilten Punkten des Brillenglases beschreibt und wobei je nach Anwendungsbereich des Brillenglases unterschiedliche Bildfehlerverteilungen als optimal angesehen werden können. Beispielsweise kann die als optimal angesehene Bildfehlerverteilung davon abhängen, ob eher die sphärischen Bildfehler oder die astigmatischen Bildfehler als störend angesehen werden. Zum Vermindern der Bildfehler in der Bildfehlerverteilung findet eine Asphärisierung einer Brillenglasfläche statt, um die für die jeweilige rezeptgemäße Wirkung als optimal angesehene Bildfehlerverteilung möglichst gut zu erreichen. Bei Asphärischen FSV-Brillengläsern (FSV-Brillenglas: Finished Single Vision Brillenglas, zu Deutsch: Fertiggestelltes Einstärken-Brillenglas) finden zur Produktion der Brillengläser typischerweise eine asphärische Vorderformschale und eine torische Rückformschale Verwendung, mit deren Hilfe ein Fertigfabrikat abgegossen wird. Bei dieser Art der Herstellung befindet sich dann die asphärische Fläche auf der Brillenglasvorderfläche und die mit dem Torus versehene Fläche bildet die Rückfläche, mit der die rezeptgemäße Wirkung realisiert wird. Mit anderen Worten, die Asphärisierung der Vorderfläche dient dazu, die Bildfehlerverteilung zu optimieren, und die Brillenglasrückfläche dazu, die rezeptgemäße Wirkung bereitzustellen. Bei diesem Herstellungsverfahren wird üblicherweise die asphärische Fläche für die Brillenglasvorderfläche für die rezeptgemäße sphärische Wirkung optimiert, um dann für mehrere rezeptgemäße sphärische und astigmatische Wirkungen Verwendung zu finden. Zum Herstellen eines Brillenglases einer FSV-Brillenglasfamilie wird typischerweise jeweils eine Vorderformschale und eine Rückformschale aus einer Menge an Vorderformschalen bzw. Rückformschalen ausgewählt und kombiniert. Dabei kann beispielsweise ein Satz von Rückformschalen jeweils eine sphärische und mehrere torische Rückformschalen bspw. bis zu einem Zylinderwert von -2 Dioptrien umfassen, die jeweils mit einer Anzahl an asphärischen Vorderformschalen kombiniert werden können. Man benutzt einen Satz von Rückformschalen für typischerweise vier sphärische Verordnungen (also z.B. von Sph -1.25D bis Sph -2.0D) hauptsächlich weil über einen solchen Bereich der Schrumpf ähnlich ist. Über den Bereich von 4 sphärischen Verordnungen hinaus muss man dann einen anderen Korrekturfaktor für den Schrumpf vorhalten. Da die asphärischen Flächen der Vorderformschalen nur für eine sphärische Rezeptwirkung optimiert sind, wird die beabsichtigte optische Korrektion, die mit der Asphäre erreicht werden soll, vor allem mit zunehmender rezeptgemäßer astigmatischer Wirkung immer mehr verfehlt. Dies liegt daran, dass, wenn die asphärische Fläche nur für sphärische Wirkungen optimiert ist und dann für viele rezeptgemäße astigmatische Wirkung Verwendung findet, die so entstehenden Brillengläser maximal in einem Hauptschnitt die bei der Optimierung der asphärischen Fläche beabsichtigte optische Korrektion aufweisen. Dies bedeutet, dass zumindest im Falle einer rezeptgemäßen astigmatischen Wirkung die Asphäre in einem der Hauptschnitte nicht für die benötigte rezeptgemäße Wirkung optimiert ist. Wollte man eine Verbesserung der mit der asphärischen Fläche zu erzielenden Korrektion erreichen, so müsste die Anzahl der optimierten asphärischen Flächen, und damit die Anzahl der Vorderformschalen, deutlich erhöht werden. Außerdem müsste die Asphärisierung der Brillenglasvorderfläche auch an die rezeptgemäße astigmatische Wirkung angepasst werden, was außer zu einer Erhöhung der Anzahl an Vorderflächenformschalen für die Herstellung einer Familie von Brillengläsern auch dazu führt, dass die asphärischen Brillenglasvorderflächen nicht mehr rotationssymmetrisch sind, so dass bei der Herstellung eines Brillenglases die Achslagen der von den Vorderflächenformschalen und Rückflächenformschalen definierten Brillenglasflächen in Übereinstimmung gebracht werden müssten. Dies würde das Herstellungsverfahren erheblich verkomplizieren.

Die US 2010/149492 A1 offenbart ein Brillenglas zum Erzielen einer rezeptgemäßen sphärischen Wirkung und einer rezeptgemäßen astigmatischen Wirkung, welches eine rotationssymmetrische Brillenglasvorderfläche aufweist. Die Rückfläche weist eine zentrale Zone auf, die asphärisiert oder atorisiert sein kann. Eine periphere Zone der Rückfläche ist ja nach Geometrie der Vorderfläche sphärisch oder torisch ausgebildet.

Aus US 3,960,442 ist eine Familie von Brillengläser mit konkaven Grundkrümmungen, die auf der Rückfläche des Brillenglases definiert sind, benannt. Die Familie von Brillengläser kann ein asphärisches oder ein atorisches Designkonzept beinhalten.

Aus WO 2018/071835 A1 ist eine Familie von Brillengläsern bekannt, in der die Brillenglasvorderflächen sphärisch und die Brillenglasrückflächen asphärisch atorisch oder als Freiformflächen ausgebildet sind. Als Vorteil dieser Ausgestaltung wird es dabei angesehen, für die Brillenglasvorderfläche diejenige Grundkurve zu verwenden, welche die größte Krümmung aufweist und es noch ermöglicht, die Rückfläche mit existierenden Mitteln herzustellen. Durch die stark gekrümmte Grundkurve wird es außerdem möglich, Bildfehlerverteilungen über das Brillenglas zu minimieren. Es können gemäß der Lehre der WO 2018/071835 A1 insbesondere Brillengläser mit derselben Flächenbrechkraft der Brillenglasvorderfläche und unterschiedlichen dioptrischen Wirkungen oder mit derselben Flächenbrechkraft der Brillenglasrückfläche und unterschiedlichen dioptrischen Wirkungen vorhanden sein.

Gegenüber diesem Stand der Technik ist es Aufgabe der vorliegenden Erfindung, ein Verfahren zum Entwerfen einer Familie von Einstärken-Brillengläsern und ein Verfahren zum Herstellen eines Brillenglases zur Verfügung zu stellen, die es ermöglichen, die Brillengläser der Familie von Einstärken-Brillengläsern mit einer geringen Anzahl an vorgegebenen Brillenglasvorderflächen und Brillenglasrückflächen zu realisieren und dabei trotzdem die optische Bildfehlerverteilung auch im Falle zunehmender rezeptgemäßer astigmatischer Wirkung gut erreichen zu können.

Diese Aufgabe wird durch ein computerimplementiertes Verfahren zum Entwerfen einer Familie von Einstärken-Brillengläsern nach Anspruch 1, ein nichtflüchtiges computerlesbares Speichermedium nach Anspruch 3 sowie ein Verfahren zum Herstellen eines Brillenglases nach Anspruch 5 gelöst. Die abhängigen Ansprüche enthalten vorteilhafte Ausgestaltungen der Erfindung.

Ein Brillenglas aus einer mit dem erfindungsgemäßen computerimplementierten Verfahren entworfenen Familie von Einstärken-Brillengläsern zum Erzielen einer rezeptgemäßen sphärischen Wirkung, die auch null sein kann, und eine rezeptgemäßen astigmatischen Wirkung, die auch null sein kann, weist eine rotationssymmetrische Brillenglasvorderfläche, d.h. eine sphärische oder rotationssymmetrische asphärische Brillenglasvorderfläche, und eine atorische Brillenglasrückfläche auf. Eine atorische Brillenglasrückfläche ist dabei eine Brillenglasrückfläche, die zwei zueinander senkrechte Hauptschnitte unterschiedlicher Krümmung besitzt und bei der der Querschnitt in mindestens einem der Hauptschnitte nicht kreisförmig ist, wobei die Hauptschnitte diejenigen Meridianebenen einer Fläche mit maximaler oder minimaler gemessener Krümmung dieser Fläche sind. Eine Meridianebene ist dabei eine Ebene, die den Krümmungsmittelpunkt der Fläche enthält.

In einem solchen Brillenglas liegt bei der atorischen Brillenglasrückfläche in wenigstens einem Hauptschnitt eine derartige Abweichung des Krümmungsverlauf von der Kreisform vor, dass bei einem Wert für den Abstand zwischen dem Scheitel der Brillenglasrückfläche und dem Augendrehpunkt, der in einem bestimmten Bereich liegt, welcher sich von 15 mm bis 40 mm und insbesondere von 20 bis 30 mm erstrecken kann, an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*Zyl\right); 0\right]$ gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann, insbesondere einen Wert aus dem Intervall [0D, -3D],
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion
bezeichnen. Mit anderen Worten, im gesamten innerhalb des Radius von 25 mm um die geometrische Brillenglasmitte gelegenen Brillenglasbereiches gilt für die Gesamtabweichung $RMS \leq 0 , 25 D - MIN \left[\left(0,05*Sph-0,1*Zyl\right); 0\right]$ und vorzugsweise sogar $RMS \leq 0 , 18 D - MIN \left[\left(0,045*Sph-0,09*Zyl\right); 0\right] .$

Die Gesamtabweichung RMS ist dabei der quadratische Mittelwert (engl.: Root Mean Square, RMS).

Aufgrund der Ausbildung der Brillenglasrückfläche als atorische Brillenglasrückfläche kann für jede astigmatische Wirkung eine dazu passende Asphäre für die Hauptschnitte des Brillenglases zur Verfügung gestellt werden, so dass auch die gewünschte Korrektur der Bildfehler in beiden Hauptschnitten erfolgen kann. Wenn nun ein Satz von atorischen Brillenglasrückflächen jeweils für einen bestimmten Bereich von sphärischen Wirkungen Verwendung findet, d.h. mit mehreren sphärischen oder rotationssymmetrisch asphärischen Brillenglasvorderflächen kombiniert wird, so kann eine gesamte Familie von Einstärken-Brillengläsern mit durchgehend geringen Bildfehlern und einer relativ geringen Anzahl an Brillenglasvorderflächen und Brillenglasrückflächen realisiert werden. Insbesondere sind nicht mehr Brillenglasvorderflächen und Brillenglasrückflächen nötig, als wenn die Bildfehlerverteilung durch eine Asphärisierung der Brillenglasvorderflächen optimiert wird, wie dies eingangs beschrieben worden ist. Gegenüber der Asphärisierung der Brillenglasvorderflächen zum Optimieren der Bildfehlerverteilung bei der Korrektur einer rezeptgemäßen astigmatischen Wirkung bietet das Optimieren der Bildfehlerverteilung anhand der atorischen Brillenglasrückfläche neben dem Vorteil der Verringerung der Bildfehler zudem den Vorteil, dass keine bevorzugte Orientierung zwischen der Brillenglasrückfläche und der Brillenglasvorderfläche eingehalten werden muss.

Wenn sich bei einer atorischen Fläche die Krümmungsradien und die nicht kreisförmigen Querschnitte in beiden Hauptschnitten einander annähern, erhält mein im Grenzfall gleicher Krümmungsradien und gleicher nicht kreisförmiger Querschnitte in beiden Hauptschnitten eine asphärische Fläche. Eine asphärische Fläche stellt in diesem Sinne eine spezielle Form der atorischen Fläche dar und soll im Rahmen der vorliegenden Erfindung von dem Begriff atorische Fläche mit umfasst sein. Eine Fläche in der sich die Krümmungsradien in beiden Hauptschnitten voneinander unterscheiden und in der der Querschnitt in mindestens einem der Hauptschnitte von der Kreisform abweicht, wird im Rahmen der vorliegenden Beschreibung als echte atorische Fläche bezeichnet. Das Brillenglas kann als atorische Brillenglasrückfläche insbesondere eine echte atorische Brillenglasrückfläche, d. h. eine Brillenglasrückfläche, die eine echte atorische Fläche ist, aufweisen.

In einer vorteilhaften Weiterbildung der Erfindung werden Werte für sphAbw, die kleiner als Null sind, in der Gleichung RMS = Sqrt(SphAbw² + (astAbw/2)²) für die Gesamtabweichung gleich Null gesetzt. Abweichungen der rezeptgemäßen sphärischen Wirkung des Brillenglases von der mit ihm tatsächlich erzielten sphärischen Wirkung, die kleiner als Null sind, können zu Null angenommen werden, weil negative Abweichungen der rezeptgemäßen sphärischen Wirkung des Brillenglases von der mit ihm tatsächlich erzielten sphärischen Wirkung, soweit sie einen gewissen Betrag nicht überschreiten, vom Brillenträger akkommodiert werden können, und somit nicht zum Bildfehler des Brillenglases beitragen. In dieser Ausgestaltung des Brillenglases sind daher nur solche Werte für die Abweichung der rezeptgemäßen sphärischen Wirkung des Brillenglases von der mit ihm tatsächlich erzielten sphärischen Wirkung berücksichtigt, die auch tatsächlich zum Bildfehler beitragen. In der Familie von Einstärken-Brillengläsern werden negative Abweichungen der rezeptgemäßen sphärischen Wirkung des Brillenglases von der mit ihm tatsächlich erzielten sphärischen Wirkung, wenn überhaupt, nur in einer Größe im Bereich von [0;-1D] erreicht.

Die Brillengläser können typischerweise für die Korrektur einer Fehlsichtigkeit in der Ferne optimiert sein. Sie werden dann üblicherweise nicht von Personen mit fortgeschrittener Alterssichtigkeit getragen, so dass davon ausgegangen werden kann, dass die die Brillengläser tragenden Personen solch geringe Werte akkommodieren können (zum Vgl.: Norm-Leseentfernung entspricht - 2.63D). Alle RMS-Werte der Gesamtabweichung und Fehlsichtigkeiten oben sind somit in der Ausgestaltung für die Korrektur einer Fehlsichtigkeit in der Ferne auch auf die Ferne (unendlich) bezogen.

Die zuvor genannten Vorteile eines Brillenglases aus einer mit dem erfindungsgemäßen computerimplementierten Verfahren entworfenen Familie von Einstärken-Brillengläsern kommen insbesondere im Falle von Einstärken-Brillengläser zum Tragen, da diese typischerweise unter Verwendung von Vorderformschalen für die Brillenglasvorderfläche und von Rückformschalen für die Brillenglasrückfläche abgegossen werden. Die Erfindung ermöglicht es, die Anzahl der für eine Familie von Einstärken-Brillengläsern vorzuhaltenden Vorderformschalen und Rückformschalen gering zu halten.

In einer Familie von Einstärken-Brillengläsern, die mit dem erfindungsgemäßen computerimplementierten Verfahren entworfen worden ist, ist jeweils ein Brillenglas zum Erzielen einer bestimmten rezeptgemäßen sphärischen Wirkung, die auch null sein kann, aus einer Anzahl von rezeptgemäßen sphärischen Wirkungen und einer bestimmten rezeptgemäßen astigmatischen Wirkung, die auch null sein kann, aus einer Anzahl von rezeptgemäßen astigmatischen Wirkungen vorhanden. Jedes Brillenglas weist eine bestimmte rotationssymmetrische Brillenglasvorderfläche, also eine bestimmte sphärische oder rotationssymmetrische asphärische Brillenglasvorderfläche, sowie eine bestimmte atorische Brillenglasrückfläche auf.

Bei jedem Brillenglas der Familie, zumindest aber bei jedem Brillenglas der Familie von Einstärken-Brillengläsern, welches eine echte atorische Brillenglasrückfläche besitzt, liegt in wenigstens einen Hauptschnitt eine derartige Abweichung des Krümmungsverlaufs von der Kreisform vor, dass bei einem Wert für den Abstand zwischen dem Scheitel der Brillenglasrückfläche und dem Augendrehpunkt, der in einem bestimmten Bereich liegt, welcher sich von 15 mm bis 40 mm und insbesondere von 20 bis 30 mm erstrecken kann, an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*Zyl\right); 0\right]$ gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann, insbesondere einen Wert aus dem Intervall [0D, -3D],
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion
bezeichnen. Mit anderen Worten, im gesamten innerhalb des Radius von 25 mm um die geometrische Brillenglasmitte gelegenen Brillenglasbereiches gilt für die Gesamtabweichung $RMS \leq 0 , 25 D - MIN \left[\left(0,05*Sph-0,1*Zyl\right); 0\right]$ und vorzugsweise sogar $RMS \leq 0 , 18 D - MIN \left[\left(0,045*Sph-0,09*Zyl\right); 0\right] .$

In der Familie von Einstärken-Brillengläsern können Werte für sphAbw, die kleiner als Null sind, in der Gleichung RMS = Sqrt(SphAbw² + (astAbw/2)²) gleich Null gesetzt sein, wie mit Bezug auf das erfindungsgemäße Brillenglas bereits erläutert worden ist.

Wie bereits mit Bezug auf das Brillenglas beschrieben worden ist, ermöglicht es die vorliegende Erfindung, die gesamte Familie von Einstärken-Brillengläsern unter Verwendung relativ weniger Brillenglasvorderflächen und Brillenglasrückflächen zu erzeugen. Dies ermöglicht es, im Falle mit Hilfe von Vorderformschalen und Rückformschalen abgegossenen Einstärken-Brillengläsern die Zahl der vorzuhaltenden Formschalen gering zu halten, weil die Familie von Einstärken-Brillengläsern Brillengläser umfassen kann, welche jeweils dieselbe atorische Brillenglasrückfläche aber jeweils unterschiedliche sphärische oder rotationssymmetrische asphärische Brillenglasvorderflächen aufweisen. Andererseits kann eine sphärische oder rotationssymmetrische asphärische Brillenglasvorderfläche jeweils auch mit mehreren atorischen Brillenglasrückflächen kombiniert werden. Insbesondere können hierbei in der Familie von Einstärken-Brillengläsern
- Gruppen von rotationssymmetrischen Brillenglasvorderflächen vorhanden sein, wobei jede Gruppe von rotationssymmetrischen Brillenglasvorderflächen eine Anzahl unterschiedlicher rotationssymmetrischer Brillenglasvorderflächen enthält,
- Gruppen von atorischen Brillenglasrückflächen vorhanden sein, wobei jede Gruppe von atorischen Brillenglasrückflächen eine Anzahl von atorischen Brillenglasrückflächen enthält und wobei jede Gruppe von atorischen Brillenglasrückflächen einer Gruppe von rotationssymmetrischen Brillenglasvorderflächen zugeordnet ist, und
- Jede Kombination einer atorischen Brillenglasrückfläche aus einer Gruppe von atorischen Brillenglasrückflächen mit einer rotationssymmetrischen Brillenglasvorderfläche aus der zugeordneten Gruppe von rotationssymmetrischen Brillenglasvorderflächen ein Brillenglas der Familie von Einstärken-Brillengläsern repräsentiert.

Durch diese gruppenweise Zuordnung kann eine Sortierung der Brillenglasvorderflächen und Brillenglasrückflächen realisiert werden, die eine rasche Zuordnung der atorischen Brillenglasrückflächen zu geeigneten rotationssymmetrischen Brillenglasvorderflächen, d. h. zu geeigneten sphärischen oder rotationssymmetrischen asphärischen Brillenglasvorderflächen ermöglicht.

Bei Einstärken-Brillengläsern kommen die Vorteile der mit dem erfindungsgemäßen Verfahren entworfenen Familie von Brillengläsern besonders zum Tragen, da die Einstärken-Brillengläser durch Abgießen unter Verwendung einer Anzahl von miteinander zu kombinierenden Vorderflächenformschalen zum Formen der Brillenglasvorderflächen und Rückflächenformschalen zum Formen der Brillenglasrückflächen abgegossen werden. In der mit dem erfindungsgemäßen Verfahren entworfenen Familie von Einstärken-Brillengläsern kann die Anzahl dieser Formschalen gering gehalten werden. Wenn zudem die beschriebenen Gruppen von rotationssymmetrischen Brillenglasvorderflächen, die beschrieben Gruppen von atorischen Brillenglasrückflächen sowie die beschriebene Zuordnung der Gruppen von atorischen Brillenglasrückflächen zu den Gruppen von rotationssymmetrischen Brillenglasvorderflächen vorhanden sind, können zudem rasch diejenigen Vorderformflächen und Rückformflächen aufgefunden werden, die miteinander zu kombinieren sind.

Im erfindungsgemäßen computerimplementierten Verfahren zum Entwurf einer Familie von Einstärken-Brillengläsern werden eine Anzahl von rezeptgemäßen sphärischen Wirkungen und eine Anzahl von rezeptgemäßen astigmatischen Wirkungen vorgegeben, und für jede Kombination einer bestimmten sphärischen Wirkung aus der Anzahl an rezeptgemäßen sphärischen Wirkungen mit einer bestimmten astigmatischen Wirkung aus der Anzahl von rezeptgemäßen astigmatischen Wirkungen wird jeweils ein Brillenglas mit einer rotationssymmetrischen Brillenglasvorderfläche, d. h. mit einer sphärischen oder rotationssymmetrischen asphärischen Brillenglasvorderfläche, und einer atorischen Brillenglasrückfläche ermittelt. Erfindungsgemäß wird für jede der atorischen Brillenglasrückflächen die Abweichung des Krümmungsverlaufs der jeweiligen atorischen Brillenglasrückflächen von der Kreisform in dem wenigstens einen Hauptschnitt für einen Wert des Abstandes zwischen dem Scheitel der Brillenglasrückfläche und dem Augendrehpunkt, der in einem bestimmten Bereich liegt, welcher sich von 15 mm bis 40 mm und insbesondere von 20 mm bis 30 mm erstrecken kann, derart ermittelt, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*Zyl\right); 0\right]$ gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann, insbesondere einen Wert aus dem Intervall [0D, -3D],
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion
bezeichnen. Mit anderen Worten, im gesamten innerhalb des Radius von 25 mm um die geometrische Brillenglasmitte gelegenen Brillenglasbereiches gilt für die Gesamtabweichung $RMS \leq 0 , 25 D - MIN \left[\left(0,05*Sph-0,1*Zyl\right); 0\right]$ und vorzugsweise sogar $RMS \leq 0 , 18 D - MIN \left[\left(0,045*Sph-0,09*Zyl\right); 0\right] .$

Die mit dem erfindungsgemäßen computerimplementierten Verfahren zum Entwurf einer Familie von Einstärken-Brillengläsern zu entwerfenden Brillengläser können insbesondere Brillengläser sein, die als atorische Brillenglasrückflächen echte atorische Brillenglasrückflächen aufweisen.

Im erfindungsgemäßen computerimplementierten Verfahren können Werte für sphAbw, die kleiner als Null sind, in der Gleichung RMS = Sqrt(SphAbw² + (astAbw/2)²) gleich Null gesetzt werden, wie mit Bezug auf das erfindungsgemäße Brillenglas bereits erläutert worden ist.

Das erfindungsgemäße computerimplementierte Verfahren ermöglicht es, eine Familie von Einstärken-Brillengläsern, wie sie zuvor beschrieben worden ist, zu entwerfen, und damit eine Familie von Einstärken-Brillengläsern, welche die zuvor beschriebenen erfindungsgemäßen Vorteile verwirklicht.

Ein erfindungsgemäßes nicht flüchtiges computerlesbares Speichermedium weist darauf gespeicherte Instruktionen zum Entwurf einer Familie von Einstärken-Brillengläsern auf, wobei die Instruktionen, wenn sie auf einen Computer ausgeführt werden, den Computer dazu veranlassen:
- Eine Anzahl von rezeptgemäßen sphärischen Wirkungen und eine Anzahl von rezeptgemäßen astigmatischen Wirkungen vorzugeben oder zu erfassen und
- für jede Kombination einer bestimmten sphärischen Wirkung aus der Anzahl an rezeptgemäßen sphärischen Wirkungen mit einer bestimmten astigmatischen Wirkung aus der Anzahl von rezeptgemäßen astigmatischen Wirkungen jeweils ein Brillenglas mit einer rotationssymmetrischen Brillenglasvorderfläche, also einer sphärischen oder rotationssymmetrischen asphärischen Brillenglasvorderfläche, und einer atorischen Brillenglasrückfläche zu ermitteln.

Erfindungsgemäß umfasst das Speichermedium außerdem darauf gespeicherte Instruktionen, die, wenn sie auf einem Computer ausgeführt werden, den Computer dazu veranlassen, für jede der atorischen Brillenglasrückflächen die Abweichung des Krümmungsverlaufes der jeweiligen atorischen Brillenglasrückfläche von der Kreisform in dem wenigstens einen Hauptschnitt für einen Wert des Abstandes zwischen dem Scheitel der Brillenglasrückfläche und dem Augendrehpunkt, der in einem bestimmten Bereich liegt, welcher sich von 15 mm bis 40 mm und insbesondere von 20 mm bis 30 mm erstrecken kann, derart zu ermitteln, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*Zyl\right); 0\right]$ gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann, insbesondere einen Wert aus dem Intervall [0D, -3D],
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
**MIN** die Minimumfunktion
bezeichnen. Mit anderen Worten, im gesamten innerhalb des Radius von 25 mm um die geometrische Brillenglasmitte gelegenen Brillenglasbereiches gi.t für die Gesamtabweichung $RMS \leq 0 , 25 D - MIN \left[\left(0,05*Sph-0,1*Zyl\right); 0\right]$ und vorzugsweise sogar $RMS \leq 0 , 18 D - MIN \left[\left(0,045*Sph-0,09*Zyl\right); 0\right] .$

Die auf dem Speichermedium gespeicherten Instruktionen können insbesondere dazu ausgelegt sein, den Computer zum Entwurf solcher Brillengläser einer Familie von Einstärken-Brillengläsern, die als atorische Brillenglasrückflächen echte atorische Brillenglasrückflächen aufweisen, zu veranlassen.

Im erfindungsgemäßen nicht flüchtigen computerlesbaren Speichermedium können Werte für sphAbw, die kleiner als Null sind, in der Gleichung RMS = Sqrt(SphAbw² + (astAbw/2)²) gleich Null gesetzt werden, wie mit Bezug auf das erfindungsgemäße Brillenglas bereits erläutert worden ist. Das erfindungsgemäße nicht flüchtige computerlesbare Speichermedium ermöglicht die Ausführung des computerimplementierte Verfahrens zum Entwurf einer Familien von Brillengläsern auf einem Computer und somit die Realisierung einer Familie von Einstärken-Brillengläsern mit den zuvor beschriebenen Vorteilen.

Im erfindungsgemäßen Verfahren zum Herstellen eines Brillenglases werden eine rezeptgemäße sphärische Wirkung und eine rezeptgemäße astigmatisch Wirkung vorgegeben. Für die Kombination aus der vorgegebenen rezeptgemäßen sphärischen Wirkung und der vorgegebenen rezeptgemäßen astigmatischen Wirkung werden eine rotationssymmetrische Brillenglasvorderfläche, also eine sphärische oder rotationssymmetrische asphärische Brillenglasvorderfläche, aus einer Anzahl unterschiedlicher vorgegebener rotationssymmetrischer Brillenglasvorderflächen und eine atorische Brillenglasrückfläche aus einer Anzahl unterschiedlicher vorgegebener atorischer Brillenglasrückflächen ausgewählt. Das Brillenglas wird dann mit der ausgewählten rotationssymmetrischen Brillenglasvorderfläche und der ausgewählten atorischen Brillenglasrückfläche geformt.

Erfindungsgemäß ist bei jeder der atorischen Brillenglasrückflächen aus der Anzahl unterschiedlicher vorgegebener atorischer Brillenglasrückflächen die Abweichung des Krümmungsverlaufs der jeweiligen atorischen Brillenglasrückfläche von der Kreisform in wenigstens einem Hauptschnitt derart ausgebildet ist, dass bei einem Wert für den Abstand zwischen dem Scheitel der Brillenglasrückfläche und dem Augendrehpunkt, der in einem bestimmten Bereich liegt, welcher sich von 15 mm bis 40 mm und insbesondere von 20 bis 30 mm erstrecken kann, an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*Zyl\right); 0\right]$ gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann, insbesondere einen Wert aus dem Intervall [0D, -3D],
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion
bezeichnen. Mit anderen Worten, im gesamten innerhalb des Radius von 25 mm um die geometrische Brillenglasmitte gelegenen Brillenglasbereiches gilt für die Gesamtabweichung $RMS \leq 0 , 25 D - MIN \left[\left(0,05*Sph-0,1*Zyl\right); 0\right]$ und vorzugsweise sogar $RMS \leq 0 , 18 D - MIN \left[\left(0,045*Sph-0,09*Zyl\right); 0\right] .$

Mit dem erfindungsgemäßen Verfahren zum Herstellen eines Brillenglases können insbesondere solche Brillengläser hergestellt werden, die als atorische Brillenglasrückfläche eine echte atorische Brillenglasrückfläche aufweisen.

Im erfindungsgemäßen Verfahren zum Herstellen eines Brillenglases können Werte für sphAbw, die kleiner als Null sind, in der Gleichung RMS = Sqrt(SphAbw² + (astAbw/2)²) gleich Null gesetzt werden, wie mit Bezug auf das erfindungsgemäße Brillenglas bereits erläutert worden ist.

Das erfindungsgemäße Verfahren ermöglicht das Herstellen eines Einstärken-Brillenglases aus der mit dem erfindungsgemäßen computerimplementierten Verfahren entworfen Familie von Einstärken-Brillengläsern und ermöglicht somit die Herstellung eines Einstärken-Brillenglases, welches die zuvor mit Bezug auf das erfindungsgemäße Brillenglas beschriebenen Eigenschaften und Vorteile aufweist.

In einer ersten Variante des erfindungsgemäßen Verfahrens zum Herstellen eines Brillenglases erfolgt das Formen wenigstens einer der Brillenglasflächen durch Abgießen. Insbesondere kann das gesamte Formen des Brillenglases durch Abgießen erfolgen. In dieser Variante sind die Brillenglasvorderflächen aus der Anzahl unterschiedlicher vorgegebener rotationssymmetrischer Brillenglasvorderflächen jeweils durch eine Vorderflächenformschale mit einer Formfläche zum Formen der jeweiligen Brillenglasvorderfläche gegeben. Zusätzlich oder alternativ sind die Brillenglasrückflächen aus der Anzahl unterschiedlicher vorgegebener atorischer Brillenglasrückflächen jeweils durch eine Rückflächenformschale mit einer Formfläche zum Formen der jeweiligen Brillenglasrückfläche gegeben. Das Formen des Brillenglases durch Abgießen ist eine kostengünstige und mit wenig Zeitaufwand durchzuführende Herstellungsmethode für Brillengläser aus einem organischen Glasmaterial.

In einer zweiten Variante des erfindungsgemäßen Verfahrens zum Herstellen eines Brillenglases erfolgt das Formen wenigstens einer der Brillenglasflächen durch Schleifen. Insbesondere kann das gesamte Formen des Brillenglases durch Schleifen erfolgen. Die Brillenglasvorderflächen aus der Anzahl unterschiedlicher vorgegebener rotationssymmetrischer Brillenglasvorderflächen sind in dieser Variante jeweils durch einen Vorderflächenschleifdatensatz zum Schleifen der jeweiligen Brillenglasvorderfläche gegeben. Zusätzlich oder alternativ sind die Brillenglasrückflächen aus der Anzahl unterschiedlicher vorgegebener atorischer Brillenglasrückflächen jeweils durch einen Rückflächenschleifdatensatz zum Schleifen der jeweiligen Brillenglasrückfläche gegeben. Das Schleifen ermöglicht das Herstellen eines erfindungsgemäßen Brillenglases.

Es besteht auch die Möglichkeit, beide Varianten zu kombinieren und eine der Brillenglasflächen durch Abgießen zu formen, wohingegen die andere Brillenglasfläche durch Schleifen geformt wird.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Figur 1: zeigt anhand eines Ablaufdiagramms ein Beispiel für das Entwerfen einer Familie von Einstärken-Brillengläsern.
- Figur 2: zeigt die Flächenbrechkraft der Vorderflächen der Einstärken-Brillengläser einer Familie von Einstärken-Brillengläsern für einen Bereich an sphärischen Wirkungen der Einstärken-Brillengläser.
- Figur 3: zeigt für die Familie von Einstärken-Brillengläsern aus Figur 2 die Flächenbrechkräfte der Brillenglasrückflächen in den Hauptschnitten.
- Figur 4: zeigt in einem Ablaufdiagramm ein Ausführungsbeispiel für das Herstellen eines Einstärken-Brillenglases der Familie von Einstärken-Brillengläsern.

Im Rahmen der vorliegenden Beschreibung finden die folgenden Definitionen Verwendung:
Dioptrische Wirkung, sphärische Wirkung und astigmatische Wirkung
Brillengläser weisen wenigstens eine dioptrische Wirkung auf, wobei der Begriff "dioptrische Wirkung" ein Sammelbegriff für die fokussierende Wirkung und die prismatische Wirkung (DIN ISO 13666:2013-10, Abschnitt 10.9) ist. Der Begriff "fokussierende Wirkung" ist wiederum ein Sammelbegriff für die sphärische Wirkung, gemäß der ein paraxiales, paralleles Strahlenbündel auf einen Punkt fokussiert wird, und die astigmatische Wirkung des Brillenglases, gemäß der ein paraxiales, paralleles Strahlenbündel auf zwei zueinander senkrecht verlaufende Linien fokussiert wird. Ein Strahlenbündel soll im Rahmen der vorliegenden Beschreibung als ein paraxiales Strahlenbündel angesehen werden, wenn es einen Durchmesser von 0,05 mm, insbesondere von 0,01 mm nicht überschreitet.

### Rezept

Der Begriff "Rezept" bezeichnet eine Zusammenstellung, in der die für die Korrektion einer diagnostizierten Fehlsichtigkeit notwendigen dioptrischen Wirkungen in Form geeigneter Werte angegeben sind. Im Falle einer sphärischen Wirkung kann das Rezept einen Wert "Sph" für Sphäre und im Falle einer astigmatischen Wirkung Werte "Zyl" für Zylinder und "Ach" für Achse enthalten. Das Rezept kann darüber hinaus weitere Werte enthalten.

### Rezeptgemäße Wirkung

Die rezeptgemäße Wirkung gibt im Rahmen der vorliegenden Beschreibung die die Soll-Wirkung des Brillenglases beim Blick durch das Brillenglas an, im Falle der rezeptgemäßen sphärischen Wirkung also bspw. den Soll-Wert für die Sphäre beim Blick durch das Brillenglas und im Falle der rezeptgemäßen astigmatischen Wirkung die Soll-Werte für die Zylinder und Achse beim Blick durch das Brillenglas.

### Hauptschnitt

Ein Hauptschnitt ist gemäß DIN ISO 13666:2013-10, Abschnitt 7.4 diejenige Meridianebene einer Fläche mit maximaler oder minimaler gemessener Krümmung dieser Fläche, wobei der Begriff "Meridianebene" gemäß DIN ISO 13666:2013-10, Abschnitt 5.7.1 eine Ebene bezeichnet, die den oder die Krümmungsmittelpunkt(e) einer Fläche beinhaltet.

### asphärisches Brillenglas

Unter dem Begriff "asphärisches Brillenglas" ist ein Brillenglas mit einer asphärischen Fläche zu verstehen, wobei eine asphärische Fläche ein Teil einer Rotationsfläche ist, deren Krümmung sich vom Scheitelpunkt zur Peripherie hin ändert (DIN ISO 13666:2013-10, Abschnitt 7.3). Eine sphärische Fläche ist dagegen Teil einer Innen- oder Außenfläche einer Kugel (DIN ISO 13666:2013-10, Abschnitt 7.1)

### atorisches Brillenglas

Unter dem Begriff "atorisches Brillenglas" ist ein Brillenglas mit einer atorischen Fläche zu verstehen, wobei eine atorische Fläche eine Fläche ist, die zwei zueinander senkrechte Hauptschnitte unterschiedlicher Krümmung besitzt und bei der der Querschnitt in mindestens einem der Hauptschnitte nicht kreisförmig ist (DIN ISO 13666:2013-10, Abschnitt 7.6). Bei einer torischen Fläche sind dagegen die Querschnitte in beiden Hauptschnitten nominell kreisförmig (DIN ISO 13666:2013-10, Abschnitt 7.5). Wenn sich bei einer atorischen Fläche die Krümmungsradien und die nicht kreisförmigen Querschnitte in beiden Hauptschnitten einander annähern, erhält mein im Grenzfall gleicher Krümmungsradien und gleicher nicht kreisförmiger Querschnitte in beiden Hauptschnitten eine asphärische Fläche. Eine asphärische Fläche stellt in diesem Sinne eine spezielle Form der atorischen Fläche dar und soll im Rahmen der vorliegenden Erfindung von dem Begriff atorische Fläche mit umfasst sein. Eine Fläche in der sich die Krümmungsradien in beiden Hauptschnitten voneinander unterscheiden und in der der Querschnitt in mindestens einem der Hauptschnitte von der Kreisform abweicht, wird im Rahmen der vorliegenden Beschreibung als echte atroische Fläche bezeichnet.

### Familie von Brillengläsern

Unter einer Familie von Brillengläsern soll im Rahmen der vorliegenden Beschreibung eine Menge von Brillengläsern zu verstehen sein, die einerseits alle durch denselben Parametersatz charakterisiert sind und sich durch den Parameterwert wenigstens eines Parameters des Parametersatzes voneinander unterscheiden, und andererseits alle mit Hilfe desselben Herstellungsverfahren herstellbar sind.

### Scheitelpunkt

Der Begriff "Scheitelpunkt" bezeichnet den Schnittpunkt der optischen Achse mit einer der beiden Oberflächen eines Brillenglases (DIN ISO 13666:2013-10, Abschnitt 4.9).

### Hornhaut-Scheitelabstand

Der Begriff "Hornhaut-Scheitelabstand" bezeichnet den Abstand zwischen der Brillenglasrückfläche und dem Apex der Hornhaut, gemessen in Blickrichtung senkrecht zur Fassungsebene (DIN ISO 13666:2013-10, Abschnitt 5.27). Die Fassungsebene ist dabei die Ebene durch die beiden vertikalen Mittellinien der rechten und der linken Scheibenebene (DIN ISO 13666:2013-10, Abschnitt 17.2), wobei die Scheibenebene eine Ebene ist, die tangential zur Vorderfläche einer in die Brillenfassung eingearbeiteten Demo- oder StützScheibe in deren geometrischen Scheibenmittelpunkt verläuft.

### sphärisches Äquivalent

Der Begriff "sphärisches Äquivalent" bezeichnet eine mittlere sphärische Wirkung eines Brillenglases mit einer sphärischen Wirkung und einer astigmatischen Wirkung, wobei die mittlere sphärische Wirkung sowohl auf der sphärischen Wirkung als auch auf der astigmatischen Wirkung des Brillenglases beruht. Das sphärische Äquivalent wird gemäß der folgenden Gleichung berechnet: Sphärisches Äquivalent = Sphäre + 0,5 x Zylinder.

### Augendrehpunkt

Der "Augendrehpunkt" bezeichnet denjenigen fiktiven Punkt im Auge, um den sich das Auge bei Blickbewegungen dreht.

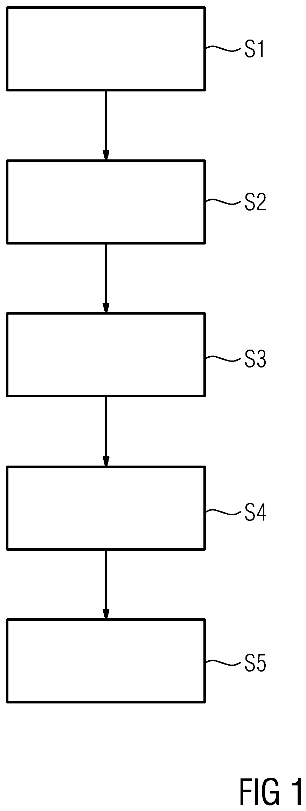

Ein Ausführungsbeispiel für das erfindungsgemäße Verfahren zum Entwerfen einer Familie von Einstärken-Brillengläsern wird nachfolgend mit Bezug auf Figur 1 beschrieben. Das Verfahren ist computerimplementiert, d.h. es wird auf einen Computer ausgeführt. Zu diesem Zweck kann das Verfahren in Form von Instruktionen auf einem computerlesbaren Speichermedium gespeichert sein. Die gespeicherten Instruktionen veranlassen einen Computer, auf dem sie ausgeführt werden, das in Figur 1 dargestellte Verfahren zum Entwurf einer Familie von Einstärken-Brillengläsern auszuführen. Das Speichermedium, auf dem die Instruktionen gespeichert sind, kann jedes geeignete nicht flüchtige computerlesbare Speichermedium sein. Solche umfassen Festplattenlaufwerke, Solid-State Discs (SSD), USB-Sticks, SD-Karten, Speicherplätze in einer Cloud, wobei diese beispielhafte Aufzählung von computerlesbaren Speichermedien nicht abschließend ist.

Im Rahmen des vorliegenden Ausführungsbeispiels für das Verfahren zum Entwurf einer Familie von Einstärken-Brillengläsern werden eine Anzahl von rezeptgemäßen sphärischen Wirkungen und eine Anzahl rezeptgemäßen astigmatischen Wirkungen vorgegeben. Die Vorgabe kann dabei entweder von extern erfolgen, d.h. die Anzahl von rezeptgemäßen sphärischen Wirkungen und die Anzahl von rezeptgemäßen astigmatischen Wirkungen wird in den Computer, auf dem das Verfahren ausgeführt wird, eingegeben. Alternativ kann das Vorgeben der Anzahl an rezeptgemäßen sphärischen Wirkungen und der Anzahl von rezeptgemäßen astigmatischen Wirkungen auch intern erfolgen, d.h. der Computer ermittelt auf der Basis von Vorgaben für diese Vorgaben rezeptgemäße sphärische Wirkungen sowie geeignete rezeptgemäße astigmatische Wirkungen. Die Vorgaben können beispielsweise das untere Ende und das obere Ende eines Bereichs von rezeptgemäßen Wirkungen sein.

Im vorliegenden Ausführungsbeispiel werden eine Anzahl von rezeptgemäßen sphärischen Wirkungen zur Korrektion von Fehlsichtigkeiten in der Ferne und eine Anzahl von rezeptgemäßen astigmatischen Wirkungen für Einstärken-Brillengläser vorgegeben (Schritt S1). Im nächsten Schritt des Verfahrens, in Schritt S2, wird für jede Kombination einer bestimmten sphärischen Wirkung aus der Anzahl von rezeptgemäßem sphärischen Wirkungen und einer bestimmten astigmatischen Wirkung aus der Anzahl von rezeptgemäßen astigmatischen Wirkungen jeweils ein Brillenglas mit einer rotationssymmetrischen Brillenglasvorderfläche und einer atorischen Brillenglasrückfläche ermittelt. Im vorliegenden Ausführungsbeispiel ist die rotationssymmetrische Brillenglasvorderfläche eine asphärische rotationssymmetrische Fläche. Die Familie von Einstärken-Brillengläsern ist dann durch eine Anzahl von Kombinationen aus asphärischen rotationssymmetrischen Brillenglasvorderflächen mit atorischen Brillenglasrückflächen gegeben. In alternativen Ausführungsformen des Verfahrens können statt der asphärischen rotationssymmetrischen Brillenglasvorderflächen rein sphärische Brillenglasvorderflächen Verwendung finden. Die Familie von Einstärken-Brillengläsern kann insbesondere Brillengläser für rezeptgemäße Werte Zyl im Intervall [0;-3D] in 0.25D-Schritten und für rezeptgemäße Werte für Sph im Intervall [+6D;-8D] in 0.25D-Schritten beinhalten.

Jede der atorischen Brillenglasrückflächen weist zwei Hauptschnitte auf. Für jede der atorischen Rückflächen wird für einen Wert a des Abstandes zwischen dem Scheitel der Brillenglasrückfläche und dem Augendrehpunkt, der gemäß der Gleichung a = HSA + (13,5 - 0,2 x S_{ä}) berechnet wird, wobei HSA für den Hornhaut-Scheitelabstand und S_{ä} für das sphärische Äquivalent stehen, jeweils die Abweichung des Krümmungsverlaufs von der Kreisform in wenigstens einem Hauptschnitt derart ermittelt, dass bei dem ermittelten Wert a für den Abstand zwischen der dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird. In der Gleichung für die Gesamtabweichung stehen sphAbw für die Abweichung der rezeptgemäßen sphärischen Wirkung des Brillenglases von der mit ihm tatsächlich erzielten sphärischen Wirkung und astAbw für die Abweichung der rezeptgemäßen astigmatischen Wirkung des Brillenglases von der mit ihm tatsächlich erzielten astigmatischen Wirkung. Falls ein Wert für sphAbw kleiner als Null ist, wird dieser im vorliegenden Ausführungsbeispiel in der Gleichung RMS = Sqrt(SphAbw² + (astAbw/2)²) gleich Null gesetzt, weil negative Abweichungen der rezeptgemäßen sphärischen Wirkung des Brillenglases von der mit ihm tatsächlich erzielten sphärischen Wirkung, soweit sie einen gewissen Betrag nicht überschreiten, vom Brillenträger akkommodiert werden können, und somit nicht zum Bildfehler des Brillenglases beitragen..

Die obere Grenze der Gesamtabweichung ist im vorliegenden Ausführungsbeispiel durch die Gleichung $RMS \leq 0 , 18 D - MIN \left[\left(0,045*Sph-0,09*Zyl\right); 0\right] .$ festgelegt, wobei Sph den Wert "Sphäre" der rezeptgemäßen sphärischen Wirkung, Zyl den Wert "Zylinder" der rezeptgemäßen astigmatischen Wirkung, der im vorliegenden Ausführungsbeispiel einen Wert aus dem Intervall [0D, - 3D] annehmen kann, und MIN die Minimumfunktion bezeichnen. Die folgende Tabelle zeigt die durch die obige Gleichung festgelegten Wert der oberen Grenze, die von der Gesamtabweichung RMS der Wirkung nicht überschritten wird, exemplarisch für den Lieferbereich einer Familie von Einstärken-Brillengläsern mit rezeptgemäßen sphärischen Wirkungen im Bereich von Sph = -8D bis Sph = +6D und Zylinderwerten der rezeptgemäßen astigmatischen Wirkung im Bereich von zyl = 0D bis Zyl = -3D.

| **Sph\Zyl** | **0** | **-1** | **-2** | **-3** |
|---|---|---|---|---|
| **-8** | 0,540 | | | |
| **-7** | 0,495 | 0,585 | | |
| **-6** | 0,450 | 0,540 | 0,630 | |
| **-5** | 0,405 | 0,495 | 0,585 | 0,675 |
| **-4** | 0,360 | 0,450 | 0,540 | 0,630 |
| **-3** | 0,315 | 0,405 | 0,495 | 0,585 |
| **-2** | 0,270 | 0,360 | 0,450 | 0,540 |
| **-1** | 0,225 | 0,315 | 0,405 | 0,495 |
| **0** | 0,180 | 0,270 | 0,360 | 0,450 |
| **1** | 0,180 | 0,225 | 0,315 | 0,405 |
| **2** | 0,180 | 0,180 | 0,270 | 0,360 |
| **3** | 0,180 | 0,180 | 0,225 | 0,315 |
| **4** | 0,180 | 0,180 | 0,180 | 0,270 |
| **5** | 0,180 | 0,180 | 0,180 | 0,225 |
| **6** | 0,180 | 0,180 | 0,180 | 0,180 |

Die Tabelle zeigt, dass für jedes Brillenglas der Familie von Einstärken-Brillengläsern die Gesamtabweichung RMS der Wirkung gering ist, insbesondere auch bei den Brillengläsern mit echten atorischen Brillenglasrückflächen - und unter diesen vor allem bei den Brillengläsern mit einem hohen rezeptgemäßen Werten für Zyl. Mit einer Asphärisierung der Brillenglasvorderfläche, wie sie aus dem Stand der Technik bekannt ist, ist die Gesamtabweichung RMS der Wirkung der Brillengläser höher als mit den atorischen Brillenglasrückflächen gemäß der vorliegenden Erfindung, insbesondere bei hohen rezeptgemäßen Werten für Zyl. Trotzdem benötigt man für die Herstellung der Brillenglasfamilie durch Abformen nicht mehr Formschalen als im Stand der Technik.

Im vorliegenden Ausführungsbeispiel findet für den Hornhaut-Scheitelabstand HSA ein Wert von 12 mm Verwendung. In alternativen Ausführungsformen können jedoch auch andere Werte für den Hornhaut-Scheitelabstand Verwendung finden, bspw. Werte im Bereich zwischen 10 mm und 15 mm. Es ist dabei grundsätzliche auch möglich, für die rotationssymmetrische Brillenglasvorderfläche und die atorische Brillenglasrückfläche unterschiedliche Hornhaut-Scheitelabstände zu verwenden.

Mit den in der Tabelle angegebenen Werten für Sph und Zyl liegt der gemäß der Gleichung a = HSA + (13,5 - 0,2 x S_{ä}) für einen Hornhaut-Scheitelabstand von 12 mm berechnete Wert a des Abstandes zwischen dem Scheitel der Brillenglasrückfläche und dem Augendrehpunkt zwischen 24,3 mm und 27,1 mm. Falls für den Hornhaut-Scheitelabstand HSA ein Wert von 10 mm statt 12 mm Verwendung findet, liegt der berechnete Wert a des Abstandes zwischen dem Scheitel der Brillenglasrückfläche und dem Augendrehpunkt zwischen 22,3 mm und 25,1 mm, und falls für den Hornhaut-Scheitelabstand HSA ein Wert von 14 mm Verwendung findet, liegt der berechnete Wert a des Abstandes zwischen der dem Scheitel der Brillenglasrückfläche und dem Augendrehpunkt zwischen 26,3 mm und 29,1 mm. Für andere Hornhaut-Scheitelabstände HSA ergeben sich entsprechen andere Bereiche, in denen der Wert a des Abstandes zwischen der dem Scheitel der Brillenglasrückfläche und dem Augendrehpunkt liegt.

Im nächsten Schritt des Verfahrens, in Schritt S3, erfolgt eine Einteilung der ermittelten asphärischen rotationssymmetrischen Brillenglasvorderflächen in Gruppen von asphärischen rotationssymmetrischen Brillenglasvorderflächen, wobei die Gruppen von asphärischen rotationssymmetrischen Brillenglasvorderflächen gemeinsam eine Menge an sich voneinander unterscheidenden asphärischen rotationssymmetrischen Brillenglasvorderflächen beinhalten. Jede Gruppe von asphärischen rotationssymmetrischen Brillenglasvorderflächen beinhaltet dabei jeweils eine disjunkte Untermenge der Menge an asphärischen rotationssymmetrischen Brillenglasvorderflächen. Im vorliegenden Ausführungsbeispiel umfassen die Gruppen von asphärischen rotationssymmetrischen Brillenglasvorderflächen jeweils vier oder fünf asphärische rotationssymmetrische Brillenglasvorderflächen, die jeweils unterschiedlichen rezeptgemäßen sphärischen Wirkungen der Brillengläser aus der Familie von Einstärken-Brillengläsern zugeordnet sind. Man Begrenzt die Anzahl an Brillenglasvorderflächen einer Gruppe typischerweise auf vier rezeptgemäße sphärische Wirkungen (also z. B. von Sph = -1.25D bis Sph = -2.0D), weil über einen solchen Bereich der Schrumpf ähnlich ist. Über Bereich von vier rezeptgemäßen sphärischen Wirkungen hinaus muss man dann einen anderen Korrekturfaktor für den Schrumpf vorhalten. Im vorliegenden Ausführungsbeispiel enthält lediglich diejenige Gruppe, die die rezeptgemäße sphärische Wirkung mit dem Sph = 0 enthält, Brillenglasvorderflächen für fünf rezeptgemäße sphärische Wirkungen.

Darüber hinaus erfolgt in Schritt S3 auch eine Einteilung der atorischen Brillenglasrückflächen in Gruppen von atorischen Brillenglasrückflächen, wobei die Gruppen von atorischen Brillenglasrückflächen gemeinsam eine Menge an atorischen Brillenglasrückflächen bilden. Jede Gruppe von atorischen Brillenglasrückflächen beinhaltet eine disjunkte Untermenge der Menge an atorischen Brillenglasrückflächen. Im vorliegenden Ausführungsbeispiel enthält jede Gruppe von atorischen Brillenglasrückflächen 13 atorische Rückflächen, die jeweils unterschiedlichen rezeptgemäßen astigmatischen Wirkungen der Brillengläser aus der Familie von Einstärken-Brillengläsern zugeordnet sind.

In Schritt S4 erfolgt sodann eine Zuordnung der Gruppen von atorischen Brillenglasrückflächen zu den Gruppen von rezeptgemäßen asphärischen rotationssymmetrischen Brillenglasvorderflächen. Im vorliegenden Ausführungsbeispiel wird dabei jede Gruppe von atorischen Brillenglasrückflächen genau einer Gruppe von asphärischen rotationssymmetrischen Brillenglasvorderflächen zugeordnet.

In Schritt S5 wird die Familie von Einstärken-Brillengläsern dann in Form der Gruppen von asphärischen rotationssymmetrischen Brillenglasvorderflächen, der Gruppen von atorischen Brillenglasrückflächen sowie der Zuordnung der Gruppen von atorischen Brillenglasrückflächen zu den Gruppen von asphärischen rotationssymmetrischen Brillenglasvorderflächen zur Verfügung gestellt.

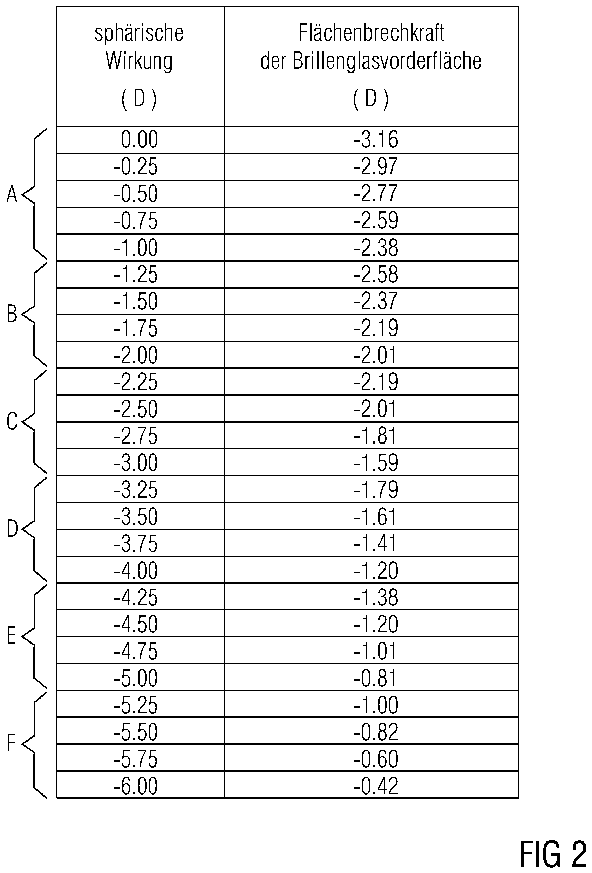

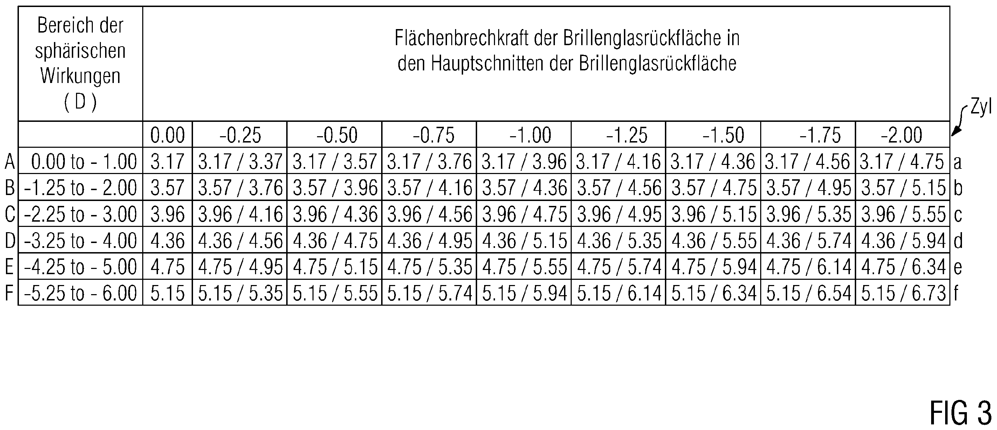

Ein Beispiel für eine gemäß dem beschriebenen Ausführungsbeispiel entworfene Familie von Einstärken-Brillengläsern aus einem Glas mit einer Brechzahl von 1,67 ist in den Figuren 2 und 3 angegeben. Figur 2 zeigt dabei sechs Gruppen A bis F von asphärischen rotationssymmetrischen Brillenglasvorderflächen, wobei jede Gruppe von asphärischen rotationssymmetrischen Brillenglasvorderflächen außer Gruppe A einen Bereich von rezeptgemäßen sphärischen Wirkungen der Brillengläser von einer Dioptrie in 0,25 Dioptrien-Schritten repräsentiert. Lediglich die Gruppe A repräsentiert einen größeren Bereich von insgesamt einer Dioptrie, da diese Gruppe die Linse mit der rezeptgemäßen sphärischen Wirkung 0 enthält. Für jede Vorderfläche ist in Figur 2 außer der rezeptgemäßen sphärischen Wirkung der Linse, für die sie Anwendung findet, auch die Flächenbrechkraft der Brillenglasvorderfläche in der geometrischen Brillenglasmitte, bezogen auf einen Brechungsindex von 1,53, angegeben. Figur 2 zeigt beispielhaft den Bereich von Sph [0;-6D] und Zyl [0;-2D], für den mit Formschalen im Durchmesser 80 mm abgegossen wird. Bei positiven Werten für die rezeptgemäße sphärische Wirkung und bei negativeren Werten für die rezeptgemäße sphärische Wirkung, d. h. im vorliegenden Ausführungsbeispiel bei rezeptgemäßen sphärischen Wirkungen mit Werten in den Intervallen [6D, 0D] bzw. [-8D, -6D], finden dagegen typischerweise Formschalen mit kleineren Durchmessern Verwendung. Da die nachfolgenden Erläuterungen in analoger Weise für rezeptgemäße sphärische Wirkungen mit Werten in den Intervallen [6D, 0D] bzw. [-8D, -6D] gelten, wird in den Figuren 2 und 3 auf die Darstellung dieser Intervalle verzichtet.

Figur 3 zeigt in der linken Spalte die Bereiche der rezeptgemäßen sphärischen Wirkungen der jeweiligen Gruppen A bis F von asphärischen rotationssymmetrischen Brillenglasvorderflächen. Die übrigen Spalten zeigen die Flächenbrechkräfte der Brillenglasrückflächen der jeweiligen atorischen Brillenglasrückflächen in der geometrischen Brillenglasmitte, die den einzelnen Gruppen A bis F von asphärischen rotationssymmetrischen Brillenglasvorderflächen zugeordnet sind, in Abhängigkeit von dem rezeptgemäßen Wert "Zyl", also dem Zylinderwert der rezeptgemäßen astigmatischen Wirkung. Jeder Gruppe von asphärischen rotationssymmetrischen Brillenglasvorderflächen A bis F ist dabei eine Gruppe von atorischen Brillenglasrückflächen a bis f zugeordnet. Alle Gruppen von atorischen Brillenglasrückflächen a bis f umfassen im vorliegenden Ausführungsbeispiel jeweils 13 unterschiedliche Brillenglasrückflächen, von denen in Figur 3 nur neun dargestellt sind (nämlich diejenigen für rezeptgemäße Zylinderwerte im Intervall [0D, -2D]), um die Tabelle kompakter gestalten zu können. Die dargestellten rezeptgemäßen Zylinderwerte zeigen somit einen Ausschnitt aus den rezeptgemäßen Zylinderwerten des Ausführungsbeispiels, wobei der Ausschnitt den Bereich der Zylinderwerte von 0 bis -2 Dioptrien in 0,25 Dioptrienschritten abdeckt. Jede atorische Rückfläche einer Gruppe von atorischen Rückflächen a bis f weist jeweils in einem Hauptschnitt dieselbe Brechkraft auf, wohingegen sie in dem dazu senkrechten Hauptschnitt unterschiedliche Flächenbrechkräfte besitzt. Die in der Tabelle angegebenen Brechkräfte beziehen sich jeweils auf die Flächenbrechkräfte in der geometrischen Brillenglasmitte und einen Brechungsindex von 1,53. In der ersten Gruppe von atorischen Rückflächen weist die Flächenbrechkraft in dem ersten Hauptschnitt den Wert 3,17 Dioptrien auf, wohingegen die Flächenbrechkraft in dem anderen Hauptschnitt zwischen 3,17 Dioptrien und 4,75 Dioptrien variiert. An dieser Stelle sei angemerkt, dass in dem Falle, dass in beiden Hauptschnitten dieselbe Flächenbrechkraft vorliegt eine asphärische Fläche statt einer atorischen Fläche vorliegt. Dieser Fall entspricht dem Zylinderwert 0,00. In der Spalte für den Zylinderwert 0,00 ist daher lediglich eine einzige Flächenbrechkraft angegeben, die in beiden Hauptschnitten der Brillenglasrückfläche vorliegt.

Wie Figur 3 zu entnehmen ist, ist jede Gruppe von atorischen Rückflächen a bis f einer Gruppe A bis F von asphärischen rotationssymmetrischen Brillenglasvorderflächen zugeordnet, wobei jede atorische Brillenglasrückfläche einer Gruppe a bis f von atorischen Brillenglasrückflächen mit jeder asphärischen rotationssymmetrischen Brillenglasvorderfläche einer Gruppe A bis F von rotationssymmetrischen asphärischen Brillenglasvorderflächen kombiniert werden kann, um ein Brillenglas der Familie von Einstärken-Brillengläsern zu repräsentieren. Aufgrund der Gruppierung der Brillenglasvorderflächen und der Brillenglasrückflächen und der freien Kombinierbarkeit der Brillenglasflächen von einender zugeordneten Gruppen ist die Anzahl an vorzuhaltenden Brillenglasvorderflächen und vorzuhaltenden Brillenglasrückflächen auf ein notwendiges Minimum begrenzt.

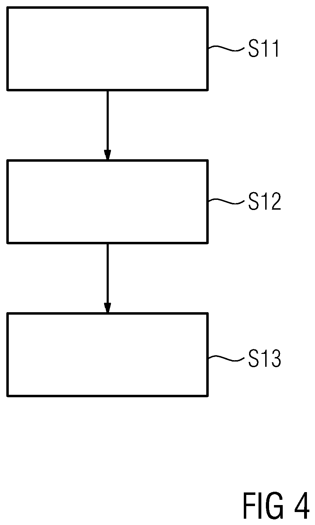

Das Herstellen eines Brillenglases der in den Figuren 2 und 3 ausschnittsweise dargestellten Familie von Einstärken-Brillengläsern wird nachfolgend anhand eines Ausführungsbeispiels unter Bezugnahme auf Figur 4 beschrieben. In einem ersten Schritt S11 des Verfahrens erfolgt die Vorgabe einer rezeptgemäßen sphärischen Wirkung und einer rezeptgemäßen astigmatischen Wirkung. Dabei kann entweder die rezeptgemäße sphärische Wirkung oder die rezeptgemäße astigmatische Wirkung auch den Wert null aufweisen. Für die Kombination aus der vorgegebenen rezeptgemäßen sphärischen Wirkung und der vorgegebenen rezeptgemäßen astigmatischen Wirkung wird sodann in Schritt S12 eine asphärische rotationssymmetrische Brillenglasvorderfläche aus derjenigen Gruppen von Brillenglasvorderflächen ausgewählt, welche die rezeptgemäße sphärische Wirkung beinhaltet. Wenn dabei die rezeptgemäße sphärische Wirkung bspw. im Intervall [0D, -6D] liegt, wird die asphärische rotationssymmetrische Brillenglasvorderfläche aus derjenigen Gruppe A bis F von Brillenglasvorderflächen ausgewählt, welche die rezeptgemäße sphärische Wirkung beinhaltet. Außerdem wird in Schritt S12 eine atorische Brillenglasrückfläche ausgewählt. Die atorische Brillenglasrückfläche wird aus der Gruppe von Brillenglasrückflächen ausgewählt, die der Gruppe von Brillenglasvorderflächen, in der sich die ausgewählte asphärische rotationssymmetrische Brillenglasvorderfläche befindet, zugeordnet ist. Wenn die rezeptgemäße sphärische Wirkung im Intervall [0D, -6D] liegt, wird die atorische Brillenglasrückfläche somit aus einer der Gruppen a bis f von Brillenglasrückflächen ausgewählt, nämlich aus derjenigen Gruppe, die der Gruppe A bis F von Brillenglasvorderflächen, in der sich die ausgewählte asphärische rotationssymmetrische Brillenglasvorderfläche befindet, zugeordnet ist. Beispielsweise im Falle einer rezeptgemäßen sphärischen Wirkung von -2,5D liegt die zugehörige Brillenglasvorderfläche in der Gruppe C, so dass die atorische Brillenglasrückfläche für die rezeptgemäße astigmatische Wirkung aus der Gruppe c ausgewählt wird. Das Auswählen der Brillenglasvorderfläche und der Brillenglasrückfläche erfolgt dabei automatisiert auf der Basis der rezeptgemäßen sphärische Wirkung und der rezeptgemäßen astigmatischen Wirkung, die das Brillenglas zur Verfügung stellen soll. In Schritt S13 wird dann ein Brillenglas gefertigt, welches die ausgewählte asphärische rotationssymmetrische Brillenglasvorderfläche und die ausgewählte atorische Brillenglasrückfläche aufweist.

In einer ersten Variante des vorliegenden Ausführungsführungsbeispiels zum Herstellen eines Brillenglases wird das Brillenglas durch Abgießen mit einem organischen Glasmaterial gefertigt. In diesem Fall liegen die Brillenglasvorderflächen und die Brillenglasrückflächen in Form von Vorderflächenformschalen und Rückflächenformschalen vor. Jede Vorderflächenformschale weist dabei eine Formfläche zum Formflächen einer der asphärischen rotationssymmetrischen Brillenglasvorderflächen auf. Entsprechend weist jede Rückflächenformschale eine Formfläche zum Formen einer der atorischen Brillenglasrückflächen auf. Das Auswählen der Brillenglasvorderfläche aus der Anzahl unterschiedlicher vorgegebener asphärischer rotationssymmetrischer Brillenglasvorderflächen erfolgt daher in dieser Variante durch Auswählen der entsprechenden Vorderflächenformschale. Das Auswählen der atorischen Brillenglasrückfläche erfolgt durch Auswählen der entsprechenden Rückflächenformschale. Mit Hilfe der ausgewählten Vorderflächenformschale und der ausgewählten Rückflächenformschale kann dann das Brillenglas beispielsweise mit Hilfe des organischen Glasmaterials abgegossen werden.

In einer zweiten Variante erfolgt die Fertigung des Brillenglases auf der Basis der ausgewählten asphärischen rotationssymmetrischen Brillenglasvorderfläche und der Basis der atorischen Brillenglasrückfläche nicht durch Abgießen, sondern durch Schleifen eines Glaskörpers. Dieses Verfahren eignet sich insbesondere im Falle anorganischer Glasmaterialien, die nicht oder nur mit sehr hohem Aufwand abgegossen werden könnten. Wenn das Fertigen des Brillenglases durch Schleifen erfolgt, sind die asphärischen rotationssymmetrischen Brillenglasvorderflächen jeweils durch einen Vorderflächendatensatz zum Schleifen der entsprechenden Brillenglasvorderfläche gegeben. Die atorischen Brillenglasrückflächen sind dann durch einen Rückflächenschleifdatensatz zum Schleifen der jeweiligen Brillenglasrückfläche gegeben.

Die vorliegende Erfindung wurde zu Erläuterungszwecken anhand von Ausführungsbeispielen im Detail beschrieben. Ein Fachmann erkennt jedoch, dass er von diesen Ausführungsbeispielen abweichen kann. Insbesondere besteht zum Beispiel die Möglichkeit, dass statt wie im vorliegenden Ausführungsbeispiel die strengere Gleichung $RMS \leq 0 , 18 D - MIN \left[\left(0,045*Sph-0,09*Zyl\right); 0\right]$ die weniger strenge Gleichung $RMS \leq 0 , 25 D - MIN \left[\left(0,05*Sph-0,1*Zyl\right); 0\right]$ zur Anwendung kommt, wenn etwas größere Bildfehler der Brillengläser akzeptiert werden können. Ein Fachmann erkennt zudem, dass weitere Abweichungen von den Ausführungsbeispielen möglich sind, ohne von der Erfindung, wie sie in den angehängten Ansprüchen definiert ist, abzuweichen.

## Patentansprüche

1. Computerimplementiertes Verfahren zum Entwurf einer Familie von
Einstärken-Brillengläsern, zum Zweck deren Herstellung, in dem
- ein eine Anzahl von rezeptgemäßen sphärischen Wirkungen und eine Anzahl von rezeptgemäßen astigmatischen Wirkungen vorgegeben werden, und
- für jede Kombination einer bestimmten sphärischen Wirkung aus der Anzahl von rezeptgemäßen sphärischen Wirkungen mit einer bestimmten astigmatischen Wirkung aus der Anzahl von rezeptgemäßen astigmatischen Wirkungen jeweils ein Brillenglas mit einer rotationssymmetrischen Brillenglasvorderfläche und einer atorischen Brillenglasrückfläche ermittelt wird,
**dadurch gekennzeichnet, dass**
für jede der atorischen Brillenglasrückflächen die Abweichung des Krümmungsverlaufs der jeweiligen atorischen Brillenglasrückfläche von der Kreisform in wenigstens einem Hauptschnitt für einen Wert für den Abstand zwischen dem Scheitel der Brillenglasrückfläche und dem Augendrehpunkt, der in einem Bereich zwischen 15 und 40 mm liegt, derart ermittelt wird, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*\left|Zyl\right|\right); 0\right]$
gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann,
IZyll den Betrag des "Zylinder"-Werts,
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion
Bezeichnen,
- die sphärischen Wirkungen in Bereiche unterteilt werden,
- aus den rotationssymmetrischen Brillenglasvorderflächen Gruppen (A-F) von rotationssymmetrischen Brillenglasvorderflächen gebildet werden, wobei jede Gruppe (A-F) einem der Bereiche an sphärischen Wirkungen entspricht und rotationssymmetrische Brillenglasvorderflächen mit unterschiedlichen sphärischen Wirkungen aus dem jeweiligen Bereich enthält, und
- den rotationssymmetrischen Brillenglasvorderflächen einer Gruppe (A-F) von rotationssymmetrischen Brillenglasvorderflächen atorische Brillenglasrückflächen zugeordnet werden, die alle in einem Hauptschnitt dieselbe Brechkraft aufweisen und im dazu senkrechten Hauptschnitt je nach Zylinderwert unterschiedliche Brechkräfte.

2. Computerimplementiertes Verfahren nach Anspruch 1, **dadurch gekennzeichnet, dass** Werte für sphAbw, die kleiner als Null sind, in der Gleichung RMS = Sqrt(SphAbw² + (astAbw/2)²) gleich Null gesetzt werden.

3. Nichtflüchtiges computerlesbares Speichermedium mit darauf gespeicherten Instruktionen zum Entwurf einer Familie von Einstärken-Brillengläsern, wobei die Instruktionen, wenn sie auf einem Computer ausgeführt werden, den Computer dazu veranlassen:
- ein eine Anzahl von rezeptgemäßen sphärischen Wirkungen und eine Anzahl von rezeptgemäßen astigmatischen Wirkungen vorzugeben oder zu erfassen und
- für jede sich aus der Kombination einer bestimmten sphärischen Wirkung aus der Anzahl von rezeptgemäßen sphärischen Wirkungen mit einer bestimmten astigmatischen Wirkung aus der Anzahl von rezeptgemäßen astigmatischen Wirkungen jeweils ein Brillenglas mit einer rotationssymmetrischen Brillenglasvorderfläche und einer atorischen Brillenglasrückfläche zu ermitteln,
**dadurch gekennzeichnet, dass** das Speichermedium außerdem darauf gespeicherte Instruktionen umfasst, die, wenn sie auf einem Computer ausgeführt werden, den Computer dazu veranlassen,
- für jede der atorischen Brillenglasrückflächen die Abweichung des Krümmungsverlaufs der jeweiligen atorischen Brillenglasrückfläche von der Kreisform in wenigstens einem Hauptschnitt für einen Wert für den Abstand zwischen dem Scheitel der Brillenglasrückfläche und dem Augendrehpunkt, der in einem Bereich zwischen 15 und 40 mm liegt, derart zu ermitteln, dass bei einem dem Wert entsprechenden Abstand zwischen dem Scheitel der Brillenglasrückfläche und dem Augendrehpunkt an jedem Punkt eines innerhalb eines Radius von 25 mm um die geometrische Brillenglasmitte gelegenen Brillenglasbereiches eine obere Grenze der Gesamtabweichung RMS = Sqrt(SphAbw² + (astAbw/2)²) der Wirkung nicht überschritten wird, wobei die obere Grenze der Gesamtabweichung durch $0 , 25 D - MIN \left[\left(0,05*Sph-0,1*\left|Zyl\right|\right); 0\right]$ gegeben ist und wobei
Sph den Wert "Sphäre" der rezeptgemäßen sphärischen Wirkung,
Zyl den Wert "Zylinder" der rezeptgemäßen astigmatischen Wirkung, der den Wer Null oder einen negativen Wert annehmen kann,
IZyll den Betrag des "Zylinder"-Werts,
sphAbw die Abweichung der rezeptgemäßen sphärischen Wirkung des Brillenglases von der mit ihm tatsächlich erzielten sphärischen Wirkung,
astAbw die Abweichung der rezeptgemäßen astigmatischen Wirkung des Brillenglases von der mit ihm tatsächlich erzielten astigmatischen Wirkung und
MIN die Minimumfunktion
bezeichnen,
- die sphärischen Wirkungen in Bereiche zu unterteilen,
- aus den rotationssymmetrischen Brillenglasvorderflächen Gruppen (A-F) von rotationssymmetrischen Brillenglasvorderflächen zu bilden, wobei jede Gruppe (A-F) einem der Bereiche an sphärischen Wirkungen entspricht und rotationssymmetrische Brillenglasvorderflächen mit unterschiedlichen sphärischen Wirkungen aus dem jeweiligen Bereich enthält, und
- den rotationssymmetrischen Brillenglasvorderflächen einer Gruppe (A-F) von rotationssymmetrischen Brillenglasvorderflächen atorische Brillenglasrückflächen zugeordnet werden, die alle in einem Hauptschnitt dieselbe Brechkraft aufweisen und im dazu senkrechten Hauptschnitt je nach Zylinderwert unterschiedliche Brechkräfte.

4. Nichtflüchtiges computerlesbares Speichermedium nach Anspruch 3, **dadurch gekennzeichnet, dass** Werte für sphAbw, die kleiner als Null sind, in der Gleichung RMS = Sqrt(SphAbw² + (astAbw/2)²) gleich Null gesetzt werden.

5. Verfahren zum Herstellen eines Einstärken-Brillenglases mit einer vorgegebenen rezeptgemäßen sphärischen Wirkung und einer vorgegebenen rezeptgemäßen astigmatischen Wirkung, wobei das Einstärken-Brillenglas ein Einstärken-Brillenglas aus der gemäß dem computerimplementierten Verfahren aus Anspruch 1 oder Anspruch 2 entworfenen Familie aus Einstärken-Brillengläsern ist, in dem
- für die Kombination aus der vorgegebenen rezeptgemäßen sphärischen Wirkung und der vorgegebenen rezeptgemäßen astigmatischen Wirkung die entsprechende rotationssymmetrische Brillenglasvorderfläche aus einer der Gruppen (A-F) von rotationssymmetrischen Brillenglasvorderflächen und die entsprechende atorische Brillenglasrückfläche aus einer Anzahl an atorischen Brillenglasrückflächen ausgewählt werden und
- das Einstärken-Brillenglas mit der ausgewählten rotationssymmetrischen Brillenglasvorderfläche und der ausgewählten atorischen Brillenglasrückfläche geformt wird.

6. Verfahren nach Anspruch 5, **dadurch gekennzeichnet, dass**
- das Formen wenigstens einer der Brillenglasflächen durch Abgießen erfolgt, wobei
- für jede Brillenglasvorderfläche aus der Anzahl unterschiedlicher vorgegebener rotationssymmetrischer Brillenglasvorderflächen jeweils eine Vorderflächenfromschale mit einer Formfläche zum Formen der jeweiligen Brillenglasvorderfläche vorhanden ist und/oder
- für jede Brillenglasrückfläche aus der Anzahl unterschiedlicher vorgegebener atorischer Brillenglasrückflächen jeweils eine Rückflächenfromschale mit einer Formfläche zum Formen der jeweiligen Brillenglasrückfläche vorhanden ist.

7. Verfahren nach Anspruch 5 oder Anspruch 6, **dadurch gekennzeichnet, dass**
- das Formen wenigstens einer der Brillenglasflächen durch Schleifen erfolgt,
- für jede Brillenglasvorderfläche aus der Anzahl unterschiedlicher vorgegebener rotationssymmetrischer Brillenglasvorderflächen jeweils ein Vorderflächenschleifdatensatz zum Schleifen der jeweiligen Brillenglasvorderfläche 'vorhanden ist und/oder
- für jede Brillenglasrückfläche aus der Anzahl unterschiedlicher vorgegebener atorischer Brillenglasrückflächen jeweils durch ein Rückflächenschleifdatensatz zum Schleifen der jeweiligen Brillenglasrückfläche vorhanden ist.

## Claims

1. Computer-implemented method for designing a family of single-vision spectacle lenses, for the purpose of the production thereof, wherein
- a number of prescription-based spherical powers and a number of prescription-based astigmatic powers are specified, and
- for each combination of a specific spherical power from the number of prescription-based spherical powers with a specific astigmatic power from the number of prescription-based astigmatic powers, in each case a spectacle lens with a rotationally symmetrical front spectacle lens surface and an atoroidal rear spectacle lens surface is determined,
**characterized in that**
for each of the atoroidal rear spectacle lens surfaces, the deviation of the curvature of the respective atoroidal rear spectacle lens surface from the circular shape in at least one principal meridian is determined for a value for the distance between the vertex of the rear spectacle lens surface and the centre of rotation of the eye that lies in a range between 15 mm and 40 mm in such a way that, with a distance between the vertex of the rear spectacle lens surface and the centre of rotation of the eye corresponding to the value, at every point of a region of the spectacle lens situated within a radius of 25 mm around the geometrical centre of the spectacle lens an upper limit of the total deviation RMS = Sqrt(SphAbw² + (astAbw/2)²) of the effect is not exceeded, where the upper limit of the total deviation is given by $0.25 D - MIN \left[\left(0.05*Sph-0.1*IZyll\right); 0\right]$
and where
Sph denotes the "sphere" value of the prescription-based spherical power,
Zyl denotes the "cylinder" value of the prescription-based astigmatic power, which can assume the value zero or a negative value, IZylI denotes the absolute value of the "cylinder" value,
sphAbw denotes the deviation of the prescription-based spherical power of the spectacle lens from the spherical power actually achieved therewith,
astAbw denotes the deviation of the prescription-based astigmatic power of the spectacle lens from the astigmatic power actually achieved therewith and
MIN denotes the minimum function.
- the spherical powers are subdivided into ranges,
- groups (A-F) of rotationally symmetrical front spectacle lens surfaces are formed from the rotationally symmetrical front spectacle lens surfaces, wherein each group (A-F) corresponds to one of the ranges of spherical powers and contains rotationally symmetrical front spectacle lens surfaces with different spherical powers from the respective range, and
- the rotationally symmetrical front spectacle lens surfaces of a group (A-F) of rotationally symmetrical front spectacle lens surfaces are assigned to atoroidal rear spectacle lens surfaces that all have the same refractive power in a principal meridian and different refractive powers depending on the cylinder value in the principal meridian perpendicular thereto.

2. Computer-implemented method according to Claim 1, **characterized in that** values for sphAbw that are less than zero are set equal to zero in the equation $RMS = Sqrt \left({SphAbw}^{2}+{\left(astAbw/2\right)}^{2}\right) .$

3. Non-volatile computer-readable storage medium with instructions stored thereon for designing a family of single-vision spectacle lenses, the instructions, when executed on a computer, causing the computer to:
- specify or record a number of prescription-based spherical powers and a number of prescription-based astigmatic powers and
- determine for each from the combination of a specific spherical power from the number of prescription-based spherical powers with a specific astigmatic power from the number of prescription-based astigmatic powers in each case a spectacle lens with a rotationally symmetrical front spectacle lens surface and an atoroidal rear spectacle lens surface,
**characterized in that** the storage medium also comprises instructions stored thereon which, when executed on a computer, cause the computer to
- determine, for each of the atoroidal rear spectacle lens surfaces, the deviation of the curvature of the respective atoroidal rear spectacle lens surface from the circular shape in at least one principal meridian for a value for the distance between the vertex of the rear spectacle lens surface and the centre of rotation of the eye that lies in a range between 15 mm and 40 mm, in such a way that, with a distance between the vertex of the rear spectacle lens surface and the centre of rotation of the eye corresponding to the value, at every point of a region of the spectacle lens situated within a radius of 25 mm around the geometrical centre of the spectacle lens an upper limit of the total deviation RMS = Sqrt(SphAbw² + (astAbw/2)²) of the effect is not exceeded, where the upper limit of the total deviation is given by $0.25 D - MIN \left[\left(0.05*Sph-0.1*IZyll\right); 0\right]$ and where
Sph denotes the "sphere" value of the prescription-based spherical power,
Zyl denotes the "cylinder" value of the prescription-based astigmatic power, which can assume the value zero or a negative value, IZylI denotes the absolute value of the "cylinder" value,
sphAbw denotes the deviation of the prescription-based spherical power of the spectacle lens from the spherical power actually achieved therewith,
astAbw denotes the deviation of the prescription-based astigmatic power of the spectacle lens from the astigmatic power actually achieved therewith and
MIN denotes the minimum function.
- subdivide the spherical powers into ranges,
- form groups (A-F) of rotationally symmetrical front spectacle lens surfaces from the rotationally symmetrical front spectacle lens surfaces, wherein each group (A-F) corresponds to one of the ranges of spherical powers and contains rotationally symmetrical front spectacle lens surfaces with different spherical powers from the respective range, and
- the rotationally symmetrical front spectacle lens surfaces of a group (A-F) of rotationally symmetrical front spectacle lens surfaces are assigned to atoroidal rear spectacle lens surfaces that all have the same refractive power in a principal meridian and different refractive powers depending on the cylinder value in the principal meridian perpendicular thereto.

4. Non-volatile computer-readable storage medium according to Claim 3, **characterized in that** values for sphAbw that are less than zero are set equal to zero in the equation RMS = Sqrt(SphAbw² + (astAbw/2)²).

5. Method for producing a single-vision spectacle lens with a specified prescription-based spherical power and a specified prescription-based astigmatic power, wherein the single-vision spectacle lens is a single-vision spectacle lens from the family of single-vision spectacle lenses designed according to the computer-implemented method from Claim 1 or Claim 2, wherein
- for the combination of the specified prescription-based spherical power and the specified prescription-based astigmatic power, the corresponding rotationally symmetrical front spectacle lens surface is selected from one of the groups (A-F) of rotationally symmetrical front spectacle lens surfaces and the corresponding atoroidal rear spectacle lens surface is selected from a number of atoroidal rear spectacle lens surfaces and
- the single-vision spectacle lens is shaped with the selected rotationally symmetrical front spectacle lens surface and the selected atoroidal rear spectacle lens surface.

6. Method according to Claim 5, **characterized in that**
- at least one of the spectacle lens surfaces is formed by casting, wherein
- for each front spectacle lens surface from the number of different specified rotationally symmetrical front spectacle lens surfaces there is in each case a front surface mould shell with a shaping surface for shaping the respective front spectacle lens surface and/or
- for each rear spectacle lens surface from the number of different specified atoroidal rear spectacle lens surfaces there is in each case a rear surface mould shell with a shaping surface for shaping the respective rear spectacle lens surface.

7. Method according to Claim 5 or Claim 6, **characterized in that**
- at least one of the spectacle lens surfaces is shaped by grinding,
- for each front spectacle lens surface from the number of different specified rotationally symmetrical front spectacle lens surfaces there is in each case a front surface grinding data set for grinding the respective front spectacle lens surface and/or
- for each rear spectacle lens surface from the number of different specified atoroidal rear spectacle lens surfaces there is in each case a rear surface grinding data set for grinding the respective rear spectacle lens surface.

## Revendications

1. Procédé mis en œuvre par ordinateur pour concevoir une famille de verres de lunettes unifocaux en vue de leur fabrication, dans lequel
- un nombre d'effets sphériques de prescription et un nombre d'effets astigmatiques de prescription sont prédéfinis, et
- pour chaque combinaison d'un certain effet sphérique parmi le nombre d'effets sphériques de prescription avec un certain effet astigmatique parmi le nombre d'effets astigmatiques de prescription, on détermine respectivement un verre de lunettes ayant une surface avant de verre de lunettes à symétrie de révolution et une surface arrière de verre de lunettes atorique, **caractérisé en ce que**,
pour chacune des surfaces arrière de verres de lunettes atoriques, l'écart de la courbure de la surface arrière de verre de lunettes atorique respective par rapport à la forme circulaire dans au moins une section principale est déterminé pour une valeur de la distance entre le sommet de la surface arrière de verre de lunettes et le point de rotation de l'œil, qui se situe dans une plage comprise entre 15 et 40 mm, de sorte qu'à une distance correspondant à cette valeur entre le sommet de la surface arrière du verre de lunettes et le point de rotation de l'œil, en tout point d'une zone du verre de lunettes située dans un rayon de 25 mm autour du centre géométrique du verre de lunettes, une limite supérieure de l'écart total RMS = Sqrt(SphAbw² + (astAbw/2)²) de l'effet n'est pas dépassée, la limite supérieure de l'écart total étant donnée par $0 , 25 D - MIN \left[\left(0,05*Sph-0,1*\left|Zyl\right|\right); 0\right]$ et où
Sph désigne la valeur « sphère » de l'effet sphérique de prescription,
Zyl désigne la valeur « cylindre » de l'effet astigmatique de prescription, qui peut prendre la valeur zéro ou une valeur négative,
|Zyl| désigne la valeur absolue de la valeur « cylindre »,
sphAbw désigne l'écart de l'effet sphérique de prescription du verre de lunettes par rapport à l'effet sphérique réellement obtenu avec celui-ci, astAbw désigne l'écart de l'effet astigmatique de prescription du verre de lunettes par rapport à l'effet astigmatique réellement obtenu avec celui-ci et
MIN désigne la fonction minimum,
- les effets sphériques sont subdivisés en plages,
- des groupes (A-F) de surfaces avant de verres de lunettes à symétrie de révolution sont formés à partir de surfaces avant de verres de lunettes à symétrie de révolution, chaque groupe (A-F) correspondant à l'une des plages d'effets sphériques et contenant des surfaces avant de verres de lunettes à symétrie de révolution ayant des effets sphériques différents provenant de la plage respective, et
- aux surfaces avant de verres de lunettes à symétrie de révolution d'un groupe (A-F) de surfaces avant de verres de lunettes à symétrie de révolution sont associées des surfaces arrière de verres de lunettes atoriques, qui présentent toutes la même puissance de réfraction dans une section principale et, dans la section principale perpendiculaire à celle-ci, des puissances de réfraction différentes en fonction de la valeur cylindre.

2. Procédé mis en œuvre par ordinateur selon la revendication 1, **caractérisé en ce que** les valeurs de sphAbw qui sont inférieures à zéro sont fixées à zéro dans l'équation RMS = Sqrt(SphAbw² + (astAbw/2)²).

3. Support de stockage non volatil lisible par ordinateur comportant des instructions stockées sur celui-ci pour la conception d'une famille de verres de lunettes unifocaux, les instructions, lorsqu'elles sont exécutées sur un ordinateur, amenant l'ordinateur à :
- prédéfinir ou acquérir un nombre d'effets sphériques de prescription et un nombre d'effets astigmatiques de prescription, et
- pour chaque combinaison d'un certain effet sphérique parmi le nombre d'effets sphériques de prescription avec un certain effet astigmatique parmi le nombre d'effets astigmatiques de prescription, déterminer respectivement un verre de lunettes ayant une surface avant de verre de lunettes à symétrie de révolution et une surface arrière de verre de lunettes atorique,
**caractérisé en ce que** le support de stockage comporte également des instructions stockées qui, lorsqu'elles sont exécutées sur un ordinateur, amènent l'ordinateur à
- pour chacune des surfaces arrière de verres de lunettes atoriques, déterminer l'écart de la courbure de la surface arrière de verre de lunettes atorique respective par rapport à la forme circulaire dans au moins une section principale pour une valeur de la distance entre le sommet de la surface arrière de verre de lunettes et le point de rotation de l'œil, qui se situe dans une plage comprise entre 15 et 40 mm, de sorte qu'à une distance correspondant à cette valeur entre le sommet de la surface arrière du verre de lunettes et le point de rotation de l'œil, en tout point d'une zone du verre de lunettes située dans un rayon de 25 mm autour du centre géométrique du verre de lunettes, une limite supérieure de l'écart total RMS = Sqrt(SphAbw² + (astAbw/2)²) de l'effet n'est pas dépassée, la limite supérieure de l'écart total étant donnée par $0 , 25 D - MIN \left[\left(0,05*Sph-0,1*\left|Zyl\right|\right); 0\right]$ et où
Sph désigne la valeur « sphère » de l'effet sphérique de prescription,
Zyl désigne la valeur « cylindre » de l'effet astigmatique de prescription, qui peut prendre la valeur zéro ou une valeur négative,
|Zyl| désigne la valeur absolue de la valeur « cylindre »,
sphAbw désigne l'écart de l'effet sphérique de prescription du verre de lunettes par rapport à l'effet sphérique réellement obtenu avec celui-ci, astAbw désigne l'écart de l'effet astigmatique de prescription du verre de lunettes par rapport à l'effet astigmatique réellement obtenu avec celui-ci et
MIN désigne la fonction minimum,
- subdiviser les effets sphériques en plages,
- former, à partir des surfaces avant de verres de lunettes à symétrie de révolution, des groupes (A-F) de surfaces avant de verres de lunettes à symétrie de révolution, chaque groupe (A-F) correspondant à l'une des plages d'effets sphériques et contenant des surfaces avant de verres de lunettes à symétrie de révolution ayant des effets sphériques différents provenant de la plage respective, et
- aux surfaces avant de verres de lunettes à symétrie de révolution d'un groupe (A-F) de surfaces avant de verres de lunettes à symétrie de révolution sont associées des surfaces arrière de verres de lunettes atoriques, qui présentent toutes la même puissance de réfraction dans une section principale et, dans la section principale perpendiculaire à celle-ci, des puissances de réfraction différentes en fonction de la valeur cylindre.

4. Support de stockage non volatil lisible par ordinateur selon la revendication 3, **caractérisé en ce que** des valeurs de sphAbw, qui sont inférieures à zéro, sont fixées à zéro dans l'équation RMS = Sqrt(SphAbw² + (astAbw/2)²).

5. Procédé de fabrication d'un verre de lunettes unifocal ayant un effet sphérique de prescription prédéfini et un effet astigmatique de prescription prédéfini, le verre de lunettes unifocal étant un verre de lunettes unifocal provenant de la famille de verres de lunettes unifocaux conçue selon le procédé mis en œuvre par ordinateur selon la revendication 1 ou la revendication 2, dans lequel
- pour la combinaison de l'effet sphérique de prescription prédéfini et de l'effet astigmatique de prescription prédéfini, la surface avant de verre de lunettes à symétrie de révolution correspondante est sélectionnée dans l'un des groupes (A-F) de surfaces avant de verres de lunettes à symétrie de révolution et la surface arrière de verre de lunettes atorique correspondante est sélectionnée parmi un nombre de surfaces arrière de verres de lunettes atoriques, et
- le verre de lunettes unifocal est mis en forme avec la surface avant de verre de lunettes à symétrie de révolution sélectionnée et la surface arrière de verre de lunettes atorique sélectionnée.

6. Procédé selon la revendication 5, **caractérisé en ce que**
- la mise en forme d'au moins l'une des surfaces de verre de lunettes est réalisée par moulage, dans lequel
- pour chaque surface avant de verre de lunettes parmi le nombre de surfaces avant de verres de lunettes à symétrie de révolution prédéfinies différentes, il existe respectivement un moule de surface avant doté d'une surface de moulage permettant de mettre en forme la surface avant de verre de lunettes respective, et/ou
- pour chaque surface arrière de verre de lunettes parmi le nombre de surfaces arrière de verres de lunettes atoriques prédéfinies différentes, il existe respectivement un moule de surface arrière doté d'une surface de moulage permettant de mettre en forme la surface arrière de verre de lunettes respective.

7. Procédé selon la revendication 5 ou la revendication 6, **caractérisé en ce que**
- la mise en forme d'au moins l'une des surfaces de verre de lunettes est réalisée par meulage,
- pour chaque surface avant de verre de lunettes parmi le nombre de surfaces avant de verres de lunettes à symétrie de révolution prédéfinies différentes, il existe respectivement un ensemble de données de meulage de surface avant permettant de meuler la surface avant de verre de lunettes respective, et/ou
- pour chaque surface arrière de verre de lunettes parmi le nombre de surfaces arrière de verres de lunettes atoriques prédéfinies différentes, il existe respectivement un ensemble de données de meulage de surface arrière permettant de meuler la surface arrière de verre de lunettes respective.
